Europäisches Patentamt

European Patent Office

Office européen des brevets

(11) Numéro de publication : **0 520 905 A1**

# (12) DEMANDE DE BREVET EUROPEEN

(21) Numéro de dépôt : **92401809.6**

(51) Int. Cl.⁵ : **C01B 13/11**

(22) Date de dépôt : **25.06.92**

(30) Priorité : **28.06.91 FR 9108096**

(43) Date de publication de la demande :
**30.12.92 Bulletin 92/53**

(84) Etats contractants désignés :
**AT BE CH DE DK ES GB IT LI NL SE**

(71) Demandeur : **TRAILIGAZ "Cie GENERALE DE L'OZONE"**
**29-31 boulevard de la Muette**
**F-95140 Garges-Les-Gonesse (FR)**

(72) Inventeur : **Zech, Michel Raymond**
**6 Avenue Pasteur**
**F-94100 Saint-Maur-Des-Fosses (FR)**

(74) Mandataire : **Habasque, Etienne Joel Jean-François et al**
**Cabinet Lavoix 2, Place d'Estienne d'Orves**
**F-75441 Paris Cédex 09 (FR)**

(54) **Dispositif de positionnement et de centrage d'un élément tel qu'une électrode dans une cellule d'un ozoneur.**

(57) Ce dispositif de positionnement et de centrage d'un élément tel qu'une électrode (1) dans une cellule (2) d'un ozoneur (3), est caractérisé en ce qu'il comporte au moins à proximité de chaque extrémité de l'élément (1), des pastilles formant entretoise (4,5,6), en matière isolante, régulièrement réparties autour de l'élément (1).

EP 0 520 905 A1

La présente invention concerne un dispositif de positionnement et de centrage d'un élément tel qu'une électrode dans une cellule d'un ozoneur.

On connaît déjà dans l'état de la technique, des dispositifs de positionnement et de centrage d'électrodes dans des cellules d'ozoneur, qui comprennent des bracelets en acier inoxydable disposés à proximité de chaque extrémité de l'électrode, autour de celle-ci, ces bracelets comportant des parties en saillie radiale venant en appui contre la paroi intérieure de la cellule pour positionner et centrer l'électrode dans celle-ci.

Cependant, cette structure présente un certain nombre d'inconvénients, car ces bracelets créent des ponts électriques et thermiques entre l'électrode et la cellule.

Par ailleurs, ces bracelets sont relativement difficiles à mettre en place.

Enfin, la tendance actuelle en matière d'ozoneur est de réduire de plus en plus l'écartement entre la paroi de la cellule et l'électrode, de sorte que l'introduction de bracelets dans cet espace augmente de manière très importante, la perte de charge dans cette cellule, ce qui entraîne une baisse de rendement de l'ozoneur.

Le but de l'invention est donc de résoudre ces problèmes en proposant un dispositif de positionnement qui soit simple, fiable, et qui n'affecte pas de manière notable, le rendement de l'ozoneur.

A cet effet, l'invention a pour objet un dispositif de positionnement et de centrage d'un élément tel qu'une électrode dans une cellule d'un ozoneur, caractérisé en ce qu'il comporte au moins à proximité de chaque extrémité de l'élément, des pastilles formant entretoise, en matière isolante, régulièrement réparties autour de l'élément.

Selon un mode de réalisation, ces pastilles sont collées sur l'élément, celui-ci est cylindrique et le dispositif peut comporter à proximité de chaque extrémité de cet élément, trois pastilles formant entretoise, disposées à 120° les unes par rapport aux autres autour de l'élément, les pastilles fixées à l'une des extrémités de l'élément étant décalées de 60° par rapport à celles fixées à l'autre extrémité de celui-ci.

Enfin, ces pastilles peuvent être en polytétrafluoroéthylène.

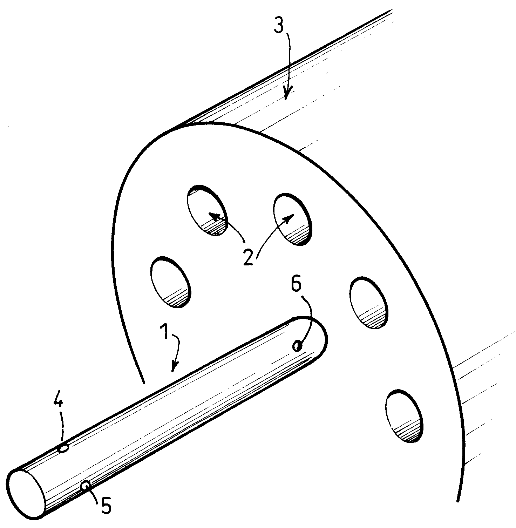

L'invention sera mieux comprise à l'aide de la description qui va suivre, donnée uniquement à titre d'exemple et faite en se référant au dessin annexé qui représente une vue schématique d'un dispositif de positionnement et de centrage selon l'invention.

Ainsi qu'on peut le voir sur cette figure, le dispositif de positionnement et de centrage selon l'invention peut être utilisé pour la mise en place d'un élément tel qu'une électrode en verre 1 dans une cellule 2 d'un ozoneur 3.

Ce dispositif comporte au moins à proximité de chaque extrémité de l'électrode 1, des pastilles formant entretoise, désignées par exemple par les références 4, 5 et 6 sur cette figure, en matière isolante comme par exemple en polytétrafluoroéthylène, régulièrement réparties autour de l'électrode.

Avantageusement, ces pastilles sont collées à proximité de chaque extrémité de l'électrode.

Selon un mode de réalisation, ce dispositif comporte à proximité de chaque extrémité de l'électrode 1, trois pastilles formant entretoise, disposées à 120° les unes par rapport aux autres, autour de l'électrode, dans la mesure où celle-ci est cylindrique, pour obtenir un bon centrage et un bon positionnement de l'électrode dans la cellule.

Avantageusement, les pastilles fixées à l'une des extrémités de l'électrode, sont décalées de 60° par rapport à celles fixées à l'autre extrémité de celle-ci.

On conçoit donc que le dispositif de positionnement et de centrage selon l'invention utilisant des pastilles formant entretoise, fixées par exemple par collage, à proximité de chaque extrémité de l'électrode, présente une structure extrêmement simple et facile à mettre en oeuvre.

Par ailleurs, ces pastilles n'engendrent qu'une très faible perte de charge dans les cellules de l'ozoneur et ne créent pas de ponts thermiques ni électriques entre les électrodes et les cellules de celui-ci.

Bien entendu, le dispositif selon l'invention peut être utilisé pour le positionnement ou le centrage de tout autre type d'éléments dans les cellules.

Enfin, les pastilles peuvent être réalisées en tout matériau isolant résistant à l'ozone.

**Revendications**

1. Dispositif de positionnement et de centrage d'un élément tel qu'une électrode (1) dans une cellule (2) d'un ozoneur (3), caractérisé en ce qu'il comporte au moins à proximité de chaque extrémité de l'élément (1), des pastilles formant entretoise (4,5,6), en matière isolante, régulièrement réparties autour de l'élément (1).

2. Dispositif selon la revendication 1, caractérisé en ce que les pastilles (4,5,6) sont collées sur l'élément.

3. Dispositif selon la revendication 1 ou 2, dans lequel l'élément est cylindrique, caractérisé en ce qu'il comporte à proximité de chaque extrémité de l'élément (1), trois pastilles (4,5,6) formant entretoise, disposées à 120° les unes par rapport aux autres, autour de l'élément (1).

4. Dispositif selon la revendication 3, caractérisé en ce que les pastilles (4,5,6) fixées à l'une des extrémités de l'élément sont décalées de 60° par rapport à celles fixées à l'autre extrémité de celui-ci.

5. Dispositif selon l'une quelconque des revendications précédentes, caractérisé en ce que les pas- tilles sont en polytétrafluoroéthylène.

# EP 0 520 905 A1

**Office européen des brevets**

# RAPPORT DE RECHERCHE EUROPEENNE

Numero de la demande

EP 92 40 1809

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-4 014 168 (ASEA BROWN BOVERI AG)<br>--- | | C01B13/11 |
| A | US-A-4 770 858 (WAYNE M. COLLINS)<br>--- | | |
| A | EP-A-0 350 905 (HENKEL CO.)<br>--- | | |
| A | DE-A-1 442 985 (BRITISH OXYGEN CO.)<br>--- | | |
| A | EP-A-0 165 424 (MESSER GRIESHEIM GMBH)<br><br>----- | | |

**DOMAINES TECHNIQUES RECHERCHES (Int. Cl.5)**

C01B

Le présent rapport a été établi pour toutes les revendications

| Lieu de la recherche | Date d'achèvement de la recherche | Examinateur |
|---|---|---|
| LA HAYE | 09 SEPTEMBRE 1992 | VAN BELLINGEN I. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)